# EUROPÄISCHE PATENTSCHRIFT

(11) **EP 1 066 964 B1**
(45) Veröffentlichungstag und Bekanntmachung des Hinweises auf die Patenterteilung: **19.02.2003**
(21) Anmeldenummer: 99113288.7
(22) Anmeldetag: 09.07.1999
(51) Int. Cl.: B41F 13/008, F16D 1/05, F16D 1/116

(54) **Antriebslagerung von rotierenden Werkzeugen in Druckmaschinen**
Drive bearing of rotating tools in printing machines
Palier d'entraînement des outils rotatives dans des machines à imprimer

(43) Veröffentlichungstag der Anmeldung: 10.01.2001
(73) Patentinhaber: GALLUS FERD. RÜESCH AG, 9016 St. Gallen (CH)
(72) Erfinder: Arabin, Dieter, 35428 Langgöns-Cleeberg (DE)
(74) Vertreter: Troesch Scheidegger Werner AG

(56) Entgegenhaltungen:
- EP-A- 0 392 323
- EP-A- 0 545 013
- US-A- 2 890 517
- US-A- 3 086 799

## Beschreibung

Die vorliegende Erfindung betrifft eine Antriebslagerung von rotierenden Werkzeugen in Druckmaschinen, insbesondere Etikettendruckmaschinen, an der in Richtung des werkzeuges ragenden Antriebswelle eines an der Druckmaschine angeordneten Servomotors.

Die heutige Entwicklung bei Druckmaschinen, insbesondere Etikettendruckmaschinen, geht dahin, die rotierenden Werkzeuge der verschiedenen Druckeinheiten nicht mehr über einen Zentralantrieb und Zahnräder, Ketten oder Zahnriemen anzutreiben, sondern jedem einzelnen Werkzeug, wie z.B. Druckzylinder, Gegendruckzylinder, Präge- und Stanzzylinder, einen eigenen Antrieb mittels Servomotor zuzuordnen.

Dies führt zu einer Druckmaschine, deren einzelne Komponenten jeder Druckeinheit sehr schnell und auf einfache Weise ausgewechselt werden können. Damit kann eine Druckmaschine optimal eingesetzt werden.

Insbesondere bei Etikettendruckmaschinen werden aber höchste Anforderungen an die präzise Lage jedes Werkzeuges gestellt, was gerade wegen der einfachen und schnellen Wechselmöglichkeiten höchste Anforderungen an die Schnittstelle der Wechselfunktionen stellt, nämlich an die Antriebslagerung zwischen dem einen Ende der Werkzeuge und der Antriebswelle des fest montierten Servomotors.

EP-A-0 392 323 zeigt zwar eine Antriebsverbindung zwischen zwei Wellen, nicht jedoch eine Antriebslagerung zwischen einem rotierenden Werkzeug und einer Antriebswelle als solche, in Form einer Oldhamkupplung zum Ausgleich eines Achsversatzes.

Bei der Konstruktion nach US-A-2 890 517 handelt es sich um die einstellbare Befestigung eines Walzenmantels auf einer Walzenwelle mittels gegeneinander wirkender Klemmkonusse mit einer Spannkonstruktion.

Aufgabe der vorliegenden Erfindung war es, eine Antriebslagerung zwischen einem rotierenden Werkzeug und einer Antriebswelle zu schaffen, welche im Hinblick auf einen Werkzeugwechsel sehr schnell gelöst werden kann und die Präzision der Lagerung im Vergleich zu konventionellen Lösungen möglichst noch verbessert wird.

Diese Aufgabe wird bei einer Antriebslagerung der eingangs definierten Art erfindungsgemäss durch die Merkmale des kennzeichnenden Teils von Anspruch 1 gelöst. Besondere Ausführungsformen des Erfindungsgegenstandes sind in den abhängigen Ansprüchen definiert.

Dank der erfindungsgemässen Konstruktion der Antriebslagerung wird für die rotierenden Druckwerkzeuge eine geometrisch optimale Verbindung zwischen Werkzeug und Antrieb geschaffen, welche rasch und leicht lösbar ist, was ein schnelles Auswechseln von Werkzeugen erlaubt.

Die Erfindung wird nachstehend anhand von in der Zeichnung dargestellten Ausführungsbeispielen noch etwas näher erläutert. Es zeigt:
- Fig. 1: rein schematisch, eine Druckmaschine mit einer Vielzahl von Druckeinheiten und Zusatzteilen;
- Fig. 2: _eine erfindungsgemässe Antriebslagerung, und
- Fig. 3: eine Variante eines Verbindungskonus.

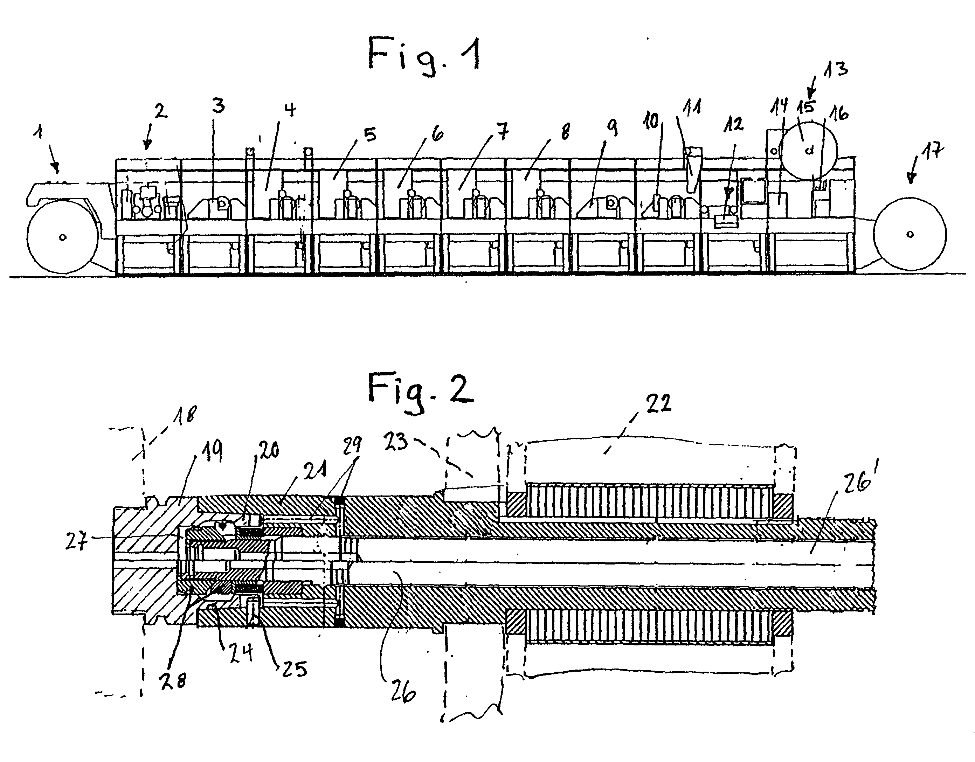

In der Zeichnung zeigt Fig. 1 eine moderne Druckmaschine, deren Teile und Druckeinheiten elektronisch gesteuert über jeweils eigene Servomotoren angetrieben werden. Die Druckmaschine weist eine Bahnabwickeleinheit 1, eine Konditionierungseinheit 2, z.B. ein Siebdruckwerk 3, ein Buchdruckwerk 4, eine Mehrzahl weiterer Druckeinheiten 5 - 9, ein Flexodruckwerk 10 mit Trocknungsvorrichtung 11, ein Versorgungsteil 12, ein Bearbeitungsteil 13 mit Stanzwerk 14, Wickeleinheit 15 und Schneideinheit 16, sowie eine Aufwickeleinheit 17 als Speicherteil auf. Je nach auszuführendem Auftrag kommen die entsprechenden Einheiten zum Einsatz.

Die rotierenden Werkzeuge sind rasch auswechselbar, um für neue Aufgaben zur Verfügung zu stehen.

Fig. 2 zeigt, wie ein rotierendes Werkzeug 18 über ein daran angebrachtes Element 19 mit axial abstehendem Verbindungskonus 20 mit der Antriebswelle 21 eines Servomotors 22 (schematisch dargestellt) lösbar, aber absolut fest verbunden bzw. gekuppelt wird (das andere Ende des Werkzeuges 18 ist in an sich bekannter Weise in einem Lager, z.B. einem Nadellager, gehalten, welches in einer leicht lösbaren, nicht dargestellten Wange eines Gestells angeordnet ist). Der Motor 22 ist ebenfalls an einer Wange 23 eines Grundgestells der Einheit befestigt.

Der Servomotor 22 dient z.B. dem Antrieb eines Formzylinders, eines Gegendruckzylinders oder dem Antrieb eines Farbwerkes.

Nach Ausfahren bzw. Wegschwenken der (nicht dargestellten) Gestellwangen werden die mit jeweils einem Verbindungskonus ausgestatteten Werkzeuge (Formzylinder, Gegendruckzylinder, Farbwerk), in die konischen Ausnehmungen 24 der Antriebswellen 21 eingeführt und darin genauestens zentriert. Damit das Werkzeug in der richtigen Winkelstellung auf der Antriebswelle 21 sitzt, ist ein Stift 25 vorgesehen, welcher den Verbindungskonus 20 in der richtigen Stellung hält (trägt ggf. auch noch zur Verdrehsicherung bei). Die eigentliche Verbindung erfolgt durch Reibschluss zwischen den Flächen des Konus 20 und der konischen Ausnehmung 24, indem der Verbindungskonus 20 mittels einem Spannstab 26 (26') gegen die Antriebswelle 21 gespannt wird (durch Anziehen am rechtsseitigen Ende, z.B. über einen Gewindetrieb).

Der Spannstab (siehe Fig. 2) greift dazu in eine zentrale hinterschnittene Bohrung 27 des Konus 20 ein, wo sich ein Spreizkopf 28 befindet, der sich soweit öffnen lässt, um den Konus 20 anzuziehen und eine optimale Antriebsverbindunng zu schaffen. Zum Lösen der Antriebsverbindung bzw. der Antriebslagerung muss lediglich der Spannstab 26 (mit Spreizkopf 28) gelöst werden.

Zum einfachen, raschen Lösen der Konusverbindung kann ggf. ein Druckmedium (z.B. Druckluft) durch Kanäle 29 eingesetzt werden.

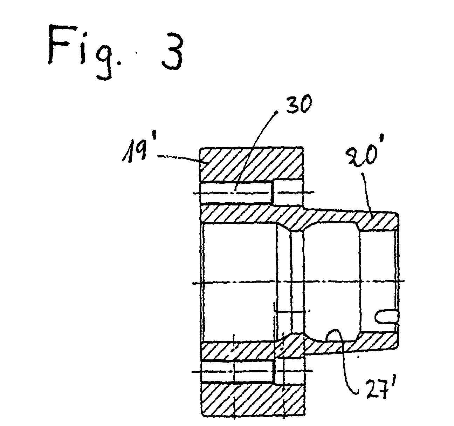

Fig. 3 der Zeichnung zeigt eine Variante eines Elementes 19' mit Verbindungskonus 20' und hinterschnittener, zentraler Bohrung 27'.

Dieses Element 19' eignet sich zum achsialen Aufschrauben auf ein Werkzeug mittels mehrerer Schrauben (Schraubenlöcher 30).

## Patentansprüche

1. Antriebslagerung von rotierenden Werkzeugen (18) in Druckmaschinen, insbesondere Etikettendruckmaschinen, an der in Richtung des werkzeuges ragenden Antriebswelle (21) eines an der Druckmaschine angeordneten Servomotors (22), **dadurch gekennzeichnet, dass** an der Schnittstelle zwischen Werkzeug (18) und Antriebswelle (21) ein Element (19) in der Werkzeugachse an diesem angeordnet ist, welches Element (19) mit einem axial abstehenden Verbindungskonus (20) versehen ist, welcher seinerseits in eine entsprechende Gegenausnehmung (24) der Antriebswelle (21) eingreift, und darin in einer vorbestimmten Winkelstellung durch Reibschluss losbar gehalten und somit gegen Verdrehung gesichert zentriert ist.

2. Antriebslagerung nach Anspruch 1, **dadurch gekennzeichnet, dass** zum lösbaren Halten des Verbindungskonus (20) letzterer mit einer hinterschnittenen Innenbohrung (27) versehen ist, in welche ein durch die Antriebswelle (21) des Motors (22) führender Spannstab (26) mit Spreizkopf (28) eingreift um den Konus (20) gegen die entsprechende Wand der Gegenausnehmung (24) in der Antriebswelle (21) anzulegen.

3. Antriebslagerung nach Anspruch 2, **dadurch gekennzeichnet, dass** Mittel (29) vorgesehen sind, um den vom Spannstab freigegebenen Konus (20) mittels eines Druckmediums vom Sitz in der Antriebswelle zu lösen.

## Claims

1. Drive bearing of rotating tools (18) in printing machines, specifically label printing machines, at the drive shaft (21) projecting in direction of the tool of a servo motor (22) located at the printing machine, **characterised in that** at the interface between tool (18) and drive shaft (21) an element (19) in the tool axis is arranged on same, which element (19) is provided with a axially projecting coupling cone (20) which engages in turn in a corresponding counter recess (24) of the drive shaft (21) and is held therein releasable by a frictional engagement at a predetermined angular position and thus centred and secured against a rotation.

2. Drive bearing according to claim 1, **characterised in that** for a releasable holding of the coupling cone (20) the latter is provided with a undercut inner bore (27) into which a tensioning rod (26) with a spreading head (28) extending through the drive shaft (21) of the motor (22) engages in order to place the cone (20) against the corresponding wall of the counter recess (24) in the drive shaft (21).

3. Drive bearing according to claim 2, **characterised in that** means (29) are provided in order to detach the cone (20) released from the tightening rod from the seat in the drive shaft by means of a pressurised medium.

## Revendications

1. Palier d'entraînement des outils rotatifs (18) dans des machines à imprimer, notamment dans des machines à imprimer des étiquettes, prévu sur l'arbre d'entraînement (21) s'étendant en direction de l'outil d'un servomoteur (22) disposé sur la machine à imprimer, **caractérisé en ce qu'**un élément (19) est disposé dans l'interface entre outil (18) et arbre d'entraînement (21) sur l'axe de l'outil, ledit élément (19) étant équipé d'un cône d'accouplement (20) s'étendant axialement est engageant à son tour un contre évidement (24) correspondant de l'arbre d'entraînement et y est retenue de manière détachable au moyen d'un engagement par friction dans une position angulaire prédéterminée pour être ainsi centré et assuré contre une rotation.

2. Palier d'entraînement selon la revendication 1, **caractérisé en ce que** pour retenir de manière détachable le cône d'accouplement (20) ce dernier présente un alésage intérieur contre dépouillé (27) dans lequel s'engage un tendeur (26) à tête d'expansion (28) s'étendant à travers l'arbre d'entraînement (21) du moteur pour ainsi placer le cône (20) contre la paroi correspondante dudit contre-évidement (24) dans l'arbre d'entraînement (21).

3. Palier d'entraînement selon la revendication 2, **caractérisé par** des moyens (29) destinés à détacher le cône (20) détaché du tendeur du siège dans l'arbre d'entraînement au moyen d'un milieu sous pression.
